# EUROPÄISCHE PATENTSCHRIFT

(11) **EP 0 654 372 B1**
(45) Veröffentlichungstag und Bekanntmachung des Hinweises auf die Patenterteilung: **16.07.1997**
(21) Anmeldenummer: 94118317.0
(22) Anmeldetag: 21.11.1994
(51) Int. Cl.: B60J 10/10, F16B 5/02

(54) **Dichtungssystem zum Abdichten von Fahrzeugscheiben gegen ein Fahrzeugverdeck**
System for sealing of vehicle windows at a foldable cover
Système d'étanchéité entre les fenêtres de véhicules et une capote pliable

(30) Priorität: 23.11.1993 DE 4339896
(43) Veröffentlichungstag der Anmeldung: 24.05.1995
(73) Patentinhaber: METZELER Automotive Profiles GmbH, D-88131 Lindau (DE)
(72) Erfinder: Glagow, Klaus, D-88142 Wasserburg (DE); Jäger, Sebastian, D-70559 Hannover (DE)
(74) Vertreter: Preissner, Nicolaus, Dipl.-Ing.

(56) Entgegenhaltungen:
- EP-A- 0 276 388
- DE-A- 3 507 800
- DE-A- 3 801 060
- DE-A- 4 038 694
- US-A- 3 411 821

## Beschreibung

Die Erfindung betrifft ein Dichtungssystem zum Abdichten der seitlichen Fahrzeugscheiben gegen das Fahrzeugverdeck, insbesondere für Cabriolets, mit den Merkmalen des Oberbegriffs des Anspruchs 1.

Bei der Abdichtung der Fensteroberkanten gegen ein klappbares Verdeck in Cabrios treten oftmals Toleranzschwierigkeiten auf. Diese sind durch das Zusammentreffen von Herstell- und Einstelltoleranzen der meist rahmenlosen Tür, der Türscheibe, der Karosserie, des Verdecks und der Verdeckabdichtung im Vergleich zu Fahrzeugen mit festem Dach relativ groß. Das Dichtsystem muß deshalb in der Lage sein, diese Toleranzen aufzufangen. Bei Cabriolets ist das eigentliche faltbare Verdeck auf einem Gestänge befestigt ist, das aus beiderseits oberhalb der Fenster längsverlaufenden Dachrahmenteilen, die durch Scharniere miteinander in Längsrichtung und über Bügel in Querrichtung verbunden sind, besteht. Die seitlichen Kanten des Verdeckes ragen dabei noch über die längsverlaufenden Dachrahmenteile hinaus und decken üblicherweise auch die Oberkante der Scheiben ab.

Entsprechende Fensterführungsprofile und Abdichtungen der Scheibe sind dabei im allgemeinen unterhalb des überstehenden Verdeckrandes an den Dachrahmenteilen befestigt. Wesentliche Dichtungsprobleme ergeben sich dabei durch die vorstehend genannten Einzeltoleranzen und Verformungen der "weichen" Türscheibe wegen des fehlenden Rahmens sowie des weichen Verdeckes.

Ein Dichtungssystem gemäß dem Oberbegriff des Anspruchs 1 ist aus der EP 0 276 388 A1 bekannt. Das bekannte Dichtungssystem ist zum Abdichten der seitlichen Fahrzeugscheiben eines Cabriolets geeignet und umfaßt seitliche, in der Seitenwandebene verlaufende starre Dachrahmenteile als Teil des klappbaren Verdeckgestänges. An den Außenseiten der Dachrahmenteile sind Halteschienenabschnitte angebracht, in welchen wiederum Fensterführungsprofile mit an der Scheibe anliegenden Dichtlippen befestigt sind. Die Befestigung der Fensterführungsprofile an dem Halteschienenabschnitt erfolgt mittels eines in dem Halteabschnitt vorgesehenen Haltestifts und zur Aufnahme des Haltestifts in der Dichtlippe vorgesehenen Ausnehmungen. Bei einer derartigen Befestigung der Fensterführungsprofile ist ein Ausgleich von Einzeltoleranzen nicht möglich.

Der vorliegenden Erfindung liegt daher die Aufgabe zugrunde, ein Dichtungssystem für derartige Fenster anzugeben, mit dem auf einfache Weise vorhandene Toleranzen in allen drei Koordinaten ausgeglichen werden können.

Zur Lösung dieser Aufgabe wird erfindungsgemäß ein Dichtungssystem mit den Merkmalen des Anspruchs 1 vorgeschlagen. Durch die erfindungsgemäße winkelförmige Ausgestaltung der Fensterführungsprofile, die auf die Außenseiten der Dachrahmenteile höhen- , längs- und seitenjustierbar angeschraubt sind, ist ein Ausgleich in allen drei Koordinatenrichtungen und somit eine effiziente Einstellung des Dichtungssystems gegeben.

Dabei ist es besonders zweckmäßig, wenn das Fensterführungsprofil aus einem angenähert U-förmigen Grundprofil aus einem eine Metallverstärkung aufweisenden elastomeren Material mit zwei abragenden Schenkeln besteht, wobei die parallel zu den Dachrahmenteilen verlaufende Profilbasis auf etwa mittlerer Höhe liegende Durchbrechungen und damit fluchtende Gewindebohrungen in den Dachrahmenteilen aufweist, in die von der Profilseite her Befestigungsschrauben eingedreht sind.

Dabei sollten diese Durchbrechungen einen Durchmesser aufweisen, der größer ist als der Durchmesser des Gewindeschaftes der Befestigungsschrauben.

Zum Ausgleich des großen Durchmessers der Durchbrechungen ist es zweckmäßig, wenn zwischen Schraubkopf und Profilbasis eine Unterlegscheibe eingefügt ist.

Zum Ausgleich seitlicher Toleranzen können zwischen der Profilbasis und den Dachrahmenteilen ebenfalls mindestens je eine Unterlegscheibe eingefügt sein.

Diese Unterlegscheiben sind zweckmäßigerweise angenähert hufeisenförmig mit einer der Kontur der Dachrahmenteile folgenden Wölbung im Basisbereich und einem freien Abstand der beiden Schenkel von mindestens dem Durchmesser des Gewindeschaftes der Befestigungsschrauben ausgebildet.

Zum Festziehen von der Innenseite können die Befestigungsschrauben dabei einen Innensechskant am Gewindeende aufweisen.

Bezüglich der Ausgestaltung des Fensterführungsprofils ist mindestens einer der freien Schenkel des Grundprofils an seine Enden zweckmäßigerweise schräg nach innen abgewinkelt, wobei jeder Schenkel eine auf die Scheibe gerichtete Dichtlippe aufweist.

Zusätzlich kann von der Innenseite des oberen Schenkels eine weitere Dichtlippe zur Scheibenoberkante gerichtet sein.

Schließlich kann parallel zum abgewinkelten Bereich des längeren Profilschenkels eine anextrudierte Dichtlippe gegen die seitliche Innenkante des Verdeckes vorgesehen sein.

Anhand einer schematischen Zeichnung sind Aufbau und Funktionsweise von Ausführungsbeispielen nach der Erfindung näher erläutert. Dabei zeigen:
- Fig. 1: eine schematische Seitenansicht eines Cabriolets mit dem Dachgestänge,
- Fig. 2: einen Querschnitt durch das Fensterführungsprofil und seine Befestigung am Dachrahmenteil und
- Fig. 3: eine Aufsicht und eine Seitenansicht einer Unterlegscheibe.

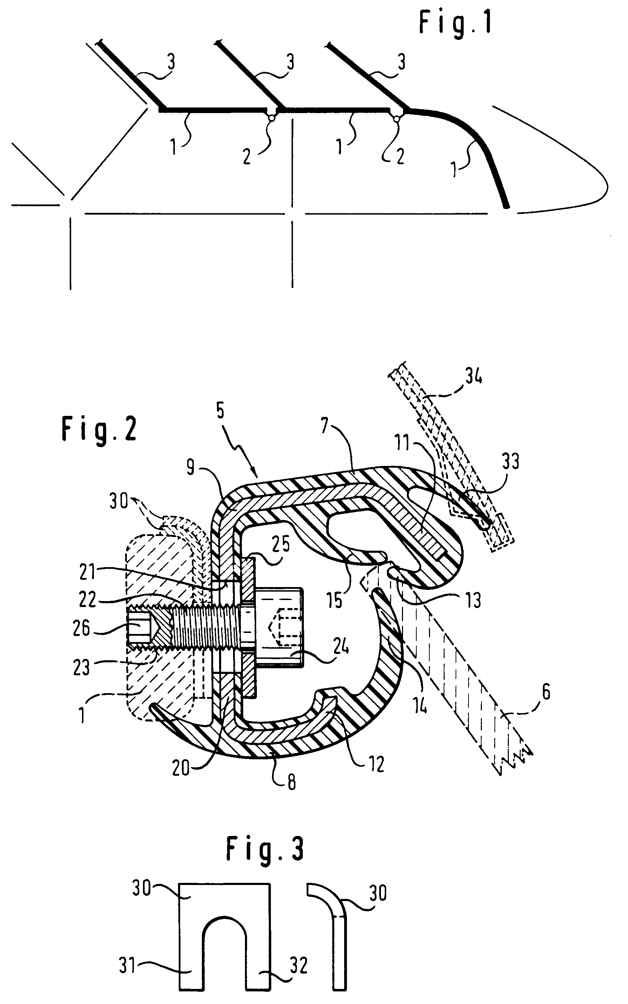

Fig. 1 zeigt eine stark schematisierte Seitenansicht eines Kraftfahrzeuges mit einem faltbaren Cabriolet-Verdeck. Dieses Verdeck wird durch ein Verdeckgerippe mit längsverlaufenden Dachrahmenteilen 1, die durch Scharniere 2 miteinander verbunden sind, sowie querverlaufenden Querträgern 3 gebildet. Die seitlichen Dachrahmenteile 1 können aus einem massiven Stahlquerschnitt bestehen, wie man das aus Fig. 2 ersieht oder aber auch aus einem U-förmigen, tiefgezogenen Blechteil.

An diese Dachrahmenteile 1 sollen nun entsprechend Fig. 2 Fensterführungsprofile 5 zur Aufnahme und Abdichtung der Oberkante der versenkbaren Scheiben 6 befestigt werden.

Dieses Profil 5 besteht nach dem dargestellten Ausführungsbeispiel aus einem angenähert U-förmigen Grundprofil mit zwei Schenkeln 7 und 8, wobei der obere Schenkel 7 länger als der untere Schenkel 8 sein kann. Das Profil 5 insgesamt ist aus einem eine Metallverstärkung 9 aufweisenden elastomeren Material gefertigt. Die freien Enden der Schenkel 7 und 8 können an ihrem Ende eine schräg nach innen geneigte Abwinklung 11 und 12 aufweisen, an die je eine auf die Scheibe 6 gerichtete Dichtlippe 13 und 14 angesetzt ist. Von der Innenseite des Schenkels 7 ragt eine weitere Dichtlippe 15 zur Oberkante der Scheibe 6. Desweiteren kann vom oberen Schenkel 7 noch eine anextrudierte Dichtlippe 33 gegen die seitliche Innenkante des Verdecks 34 vorgesehen sein.

Zur Befestigung dieses Profils 5 an den Dachrahmenteilen 1 ist die parallel zu den Dachrahmenteilen 1 verlaufende Profilbasis 20 mit etwa auf mittlerer Höhe liegenden Durchbrechungen 21 versehen, durch die von der Innenseite des Profils 5 her Befestigungsschrauben 24 hindurchgeführt werden können, die in entsprechende Gewindebohrungen 23 im Dachrahmenteil 1 eingeschraubt werden. Die Durchbrechungen 21 weisen einen relativ großen Durchmesser auf, der abhängig von der Größe der auszugleichenden Toleranzen bis zu doppelt so groß wie der Durchmesser des Gewindeschaftes 22 der Befestigungsschrauben 24 oder auch größer sein kann.

Bei der Montage werden zunächst die Befestigungsschrauben 24 zusammen mit Unterlegscheiben 25, deren Außendurchmesser größer ist als der der Durchbrechungen 21, durch den Scheibeneinlaufbereich des Profils 5 in die entsprechenden Durchbrechungen 21 des Profils eingesteckt. Anschließend werden diese Schrauben 24 in die Dachrahmenteile 1 eingeschraubt und zwar entweder durch den Scheibeneinlaufbereich des Dichtungsprofils 5 her oder von der Dachrahmeninnenseite über einen Innensechskant 26 im Gewindeende der Schraube 24.

Gleichzeitig werden zwischen das Profil 5 und die Dachrahmenteile 1 hufeisenförmige Unterlegscheiben 30 in der erforderlichen Zahl eingelegt. Diese Unterlegscheiben 30 sind in Fig. 3 nochmals in Aufsicht und in Seitenansicht gezeigt, wobei das obere Ende entsprechend der oberen Kontur der Dachrahmenteile 1 gewölbt ist und der freie Abstand der beiden Schenkel 31 und 32 etwa dem Durchmesser des Gewindeschaftes 22 der Befestigungsschrauben 24 entspricht.

Durch den relativ großen Durchmesser der Durchbrechungen 21 ist somit eine freie Einstellmöglichkeit des Profils 5 in Längsrichtung und in Hochrichtung des Daches praktisch in der Größe der halben Durchmesserdifferenz von Schraubenschäften 22 und Durchbrechungen 21 möglich. In Querrichtung besteht diese Einstellmöglichkeit durch Hinzufügen oder Wegnehmen von Unterlegscheiben 30.

Nach einer optimalen Einstellung des Profils 5 zur Scheibe 6 hin werden die Schrauben 24 definiert festgedreht, wobei jederzeit ein Nachjustieren auch am fertig montierten Fahrzeug möglich ist.

Mit der beschriebenen Anordnung - wobei jedoch das Dichtungsprofil auch abweichend ausgebildet sein kann - ist somit ein leichtes und genaues Justieren dieses Profils zur Scheibe möglich, um damit vorhandene Toleranzen auszugleichen.

## Patentansprüche

1. Dichtungssystem zum Abdichten der seitlichen Fahrzeugscheiben (6) gegen das Fahrzeugverdeck (34), insbesondere für Cabriolets, mit seitlichen, in der Seitenwandebene verlaufenden starren Dachrahmenteilen (1) als Teil des klappbaren Verdeckgestänges (1, 2, 3), wobei an den Außenseiten der Dachrahmenteile (1) Fensterführungsprofile (5) mit an der Scheibe (6) anliegenden Dichtlippen (13, 14, 15) angeordnet sind, dadurch gekennzeichnet, daß die Fensterführungsprofile (5) winkelförmig ausgebildet und auf die Außenseiten der Dachrahmenteile (1) höhen-, längs- und seitenjustierbar angeschraubt sind.

2. Dichtungssystem nach Anspruch 1, dadurch gekennzeichnet, daß das Fensterführungsprofil (5) aus einem angenähert U-förmigen Grundprofil aus einem eine Metallverstärkung (9) aufweisenden elastomeren Material mit zwei abragenden Schenkeln (7, 8) besteht, wobei die parallel zu den Dachrahmenteilen (1) verlaufende Profilbasis (20) auf etwa mittlerer Höhe liegende Durchbrechungen (21) und damit fluchtende Gewindebohrungen (23) in den Dachrahmenteilen (1) aufweist, in die von der Profilseite her Befestigungsschrauben (24) eingedreht sind.

3. Dichtungssystem nach Anspruch 2, dadurch gekennzeichnet, daß die Durchbrechungen (21) einen Durchmesser aufweisen, der größer ist als der Durchmesser des Gewindeschaftes (22) der Befestigungsschrauben (24).

4. Dichtungssystem nach Anspruch 2 und 3, dadurch gekennzeichnet, daß zwischen Schraubkopf (24) und Profilbasis (20) eine Unterlegscheibe (25) eingefügt ist.

5. Dichtungssystem nach Anspruch 2, dadurch gekennzeichnet, daß zwischen Profilbasis (20) und Dachrahmenteilen (1) mindestens eine Unterlegscheibe (30) eingefügt ist.

6. Dichtungssystem nach Anspruch 5, dadurch gekennzeichnet, daß die Unterlegscheiben (30) angenähert hufeisenförmig mit einer der Kontur der Dachrahmenteile (1) folgenden Wölbung im Basisbereich und einen freien Abstand der beiden Schenkel (31, 32) von mindestens dem Durchmesser des Gewindeschaftes (22) der Befestigungsschrauben (24) ausgebildet sind.

7. Dichtungssystem nach Anspruch 2, dadurch gekennzeichnet, daß die Befestigungsschrauben (24) einen Innensechskant (26) im Gewindeende aufweisen.

8. Dichtungssystem nach Anspruch 2, dadurch gekennzeichnet, daß mindestens einer der freien Schenkel (7, 8) des Grundprofils (5) an seinem Ende eine schräg nach innen gerichtete Abwinklung (11, 12) aufweist, und daß an jedes Schenkelende eine auf die Scheibe (6) gerichtete Dichtlippe (13, 14) anextrudiert ist.

9. Dichtungssystem nach Anspruch 2, dadurch gekennzeichnet, daß von der Innenseite des oberen Schenkels (7) eine weitere Dichtlippe (15) zur Scheibenoberkante (6) gerichtet ist.

10. Dichtungssystem nach Anspruch 8 und 9, dadurch gekennzeichnet, daß parallel zum abgewinkelten Bereich (11) des Profilschenkels (7) eine anextrudierte Dichtlippe (33) gegen die seitliche Innenkante des Verdecks (34) vorgesehen ist.

## Claims

1. A system for sealing vehicle side windows (6) from a convertible top (34), more particularly for covertibles, including side rigid roof frame parts (1) oriented in the side wall plane as part of the folding top linkage (1, 2, 3), whereby window guide profiles (5) having sealing lips (13, 14, 15) adjoining the window (6) being arranged at the outer sides of said roof frame parts (1),
characterized in that said window guide profiles (5) are formed angularly and are screwed to the outer sides of said roof frame parts (1) adjustable in height, length and lateral spacing.

2. The sealing system as set forth in claim 1,
characterized in that said window guide profile (5) is made of an approximate U-shaped basic profile of an elastomeric material with two protruding legs (7, 8) featuring a metallic reinforcement (9), said profile base (20) oriented parallel to said roof frame parts (1) comprising penetrations (21) located roughly at half height and coincident tappings (23) in said roof frame parts (1) into which fastener screws (24) are screwed from the profile side.

3. The sealing system as set forth in claim 2,
characterized in that said penetrations (21) having a diameter which is larger than said diameter of said threaded shank (22) of said fastener screws (24).

4. The sealing system as set forth in claim 2 and 3,
characterized in that a washer (25) is inserted between said screw head (24) and said profile base (20).

5. The sealing system as set forth in claim 2,
characterized in that at least one washer (30) is inserted between said profile base (20) and said roof frame parts (1).

6. The sealing system as set forth in claim 5,
characterized in that said washers (30) are expediently configured approximate horse-shoe shaped with a curvature following the contour of said roof frame parts (1) in the base region and with a free spacing of said two legs (31, 32) amounting to at least the diameter of said threaded shank (22) of said fastener screws (24).

7. The sealing system as set forth in claim 2,
characterized in that said fastener screws (24) comprise a hexagon socket (26) at the thread end.

8. The sealing system as set forth in claim 2,
characterized in that at least one of said free legs (7, 8) of said basic profile (5) is expediently downswept (11, 12) inclined inwardly at its end, and a sealing lip (13, 14) facing said window (6) is extruded in place at each leg end.

9. The sealing system as set forth in claim 2,
characterized in that a further sealing lip (15) may face the window top edge (6) at said inner side of said upper leg (7).

10. The sealing system as set forth in claim 8 and 9,
characterized in that a sealing lip (33) extruded in place against said side inner edge of said convertible top (34) being provided parallel to said downswept region (11) of said profile leg (7).

## Revendications

1. Système d'étanchéité pour étancher les vitres latérales d'un véhicule (6) contre la capote de toiture (34), en particulier pour cabriolets, comportant des parties de cadres de toiture rigides latérales (1) qui s'étendent dans le plan des parois latérales, en tant que partie de la tringlerie de capote repliable (1, 2, 3), et sur les faces extérieures des parties de cadres de toiture (1) sont agencés des profilés de guidage de fenêtre (5) avec des lèvres d'étanchéité (13, 14, 15) en appui contre la vitre (6), caractérisé en ce que les profilés de guidage de fenêtre (5) sont réalisés sous forme coudée et sont vissés sur les côtés extérieurs des parties de cadre de toiture (1) en pouvant être ajustés en hauteur, longitudinalement et latéralement.

2. Système d'étanchéité selon la revendication 1, caractérisé en ce que le profilé de guidage de fenêtre (5) est constitué d'un profilé de base approximativement en forme de U en matériau élastomère comportant une armature métallique (9), avec deux bras en saillie (7, 8), la base de profilé (20), qui s'étend parallèlement aux parties de cadres de toiture (1), présentant approximativement à hauteur médiane des traversées (21) et des perçages taraudés (23) en alignement avec ces traversées, dans les parties de cadres de toiture (1), dans lesquels sont vissées des vis de fixation (24) depuis le côté du profilé.

3. Système d'étanchéité selon la revendication 2, caractérisé en ce que les traversées (21) ont un diamètre qui est supérieur au diamètre de la tige filetée (22) des vis de fixation (24).

4. Système d'étanchéité selon les revendications 2 et 3, caractérisé en ce que, entre la tête de vis (24) et la base de profilé (20), est introduite une rondelle d'appui (25).

5. Système d'étanchéité selon la revendication 2, caractérisé en ce que, entre la base de profilé (20) et les parties de cadres de toiture (1), est introduite au moins une rondelle d'appui (30).

6. Système d'étanchéité selon la revendication 5, caractérisé en ce que les rondelles d'appui (30) sont réalisées approximativement en forme de fer à cheval, avec un bombement dans la région de base, qui suit le contour des parties de cadres de toiture (1), et avec une distance libre entre les deux bras (31, 32) au moins égale au diamètre de la tige filetée (22) des vis de fixation (24).

7. Système d'étanchéité selon la revendication 2, caractérisé en ce que les vis de fixation (24) comportent un six-pans creux (26) dans l'extrémité du filetage.

8. Système d'étanchéité selon la revendication 2, caractérisé en ce que l'un au moins des bras libres (7, 8) du profilé de base (5) comporte à son extrémité un coudage (11, 12) dirigé en oblique vers l'intérieur, et en ce que sur chaque extrémité des bras est extrudée une lèvre d'étanchéité (13, 14) dirigée vers la vitre (6).

9. Système d'étanchéité selon la revendication 2, caractérisé en ce que, depuis le côté intérieur du bras supérieur (7), une autre lèvre d'étanchéité (15) est dirigée vers l'arête supérieure de vitre (6).

10. Système d'étanchéité selon les revendications 8 et 9, caractérisé en ce qu'il est prévu parallèlement à la région coudée (11) du bras de profilé (7) une lèvre d'étanchéité extrudée (33) contre l'arête intérieure latérale de la capote (34).
